Europäisches Patentamt

European Patent Office

Office européen des brevets

(19)

(11) Publication number: **0 105 582**
**B1**

(12) **EUROPEAN PATENT SPECIFICATION**

(45) Date of publication of patent specification: **30.12.86**

(51) Int. Cl.⁴: **A 21 C 11/02, A 21 D 13/00**

(21) Application number: **83304588.3**

(22) Date of filing: **09.08.83**

(54) Apparatus and method for dough embossing.

(30) Priority: **01.09.82 US 413886**

(43) Date of publication of application:
**18.04.84 Bulletin 84/16**

(45) Publication of the grant of the patent:
**30.12.86 Bulletin 86/52**

(84) Designated Contracting States:
**BE DE FR GB IT LU NL**

(56) References cited:
**DE-C- 353 730**
**FR-A- 343 469**
**FR-A-1 127 405**
**FR-A-2 335 161**
**US-A-1 566 771**
**US-A-2 099 614**
**US-A-2 195 346**
**US-A-4 170 659**

(73) Proprietor: **SCHWAN'S SALES ENTERPRISES, INC.**
**115 West College Drive**
**Marshall Minnesota 56258 (US)**

(72) Inventor: **Ricke, Roy R.**
**934 Marymount**
**Salina Kansas 67401 (US)**

(74) Representative: **Cheyne, John Robert Alexander Mackenzie et al**
**HASELTINE LAKE & CO. 28 Southampton Buildings Chancery Lane**
**London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to an embosser and a method for embossing dough which when fried can be used as pizza shells or crusts.

Pizzas are extremely popular foods since they are tasty, convenient, and easy to prepare. Frozen pizzas can be purchased and can be conveniently reheated at home in a short period of time before consumption. While frozen pizzas continue to be an extremely popular food, they have encountered substantial consumer resistance since they do not compare favorably to pizzeria pizzas or those made at home from basic ingredients such as flour, water, tomato sauce, and meat. In other words frozen pizzas are often purchased for convenience rather than flavor.

Consumer resistance to prepared frozen pizzas is commonly directed to the quality of the shell or crust after baking. Initially, pizza shells or crusts comprised generally circular sections of dough that were prebaked at the factory, topped with pizza toppings, quick frozen and stored until sale. Upon reheating, consumers found that these prebaked shells would not become crisp during baking, or tended to be tough, hard, brittle or crackerlike after baking. In the face of such substantial consumer resistance, many pizza manufacturers developed pizza shells or crusts that were fried in oil prior to the application of pizza topping. Fried pizza crusts have solved many consumer and production related problems, but the fried crusts still possess drawbacks.

In our research, we have found that by frying pizza shaped dough sections, large delaminated areas can appear. In delaminated areas the pizza crust separates into two layers separated by a large space. Further, we have found that large non-delaminated areas can also remain in the pizza crust in which no separation at all occurs. The large delaminated areas that form during frying can often be overcooked, can become extremely crispy and can have substantial size. The large non-delaminated areas can absorb substantial amounts of oil, can be undercooked, and can become soggy. The non-delaminated areas can have an oily character and taste. We have identified the inability to control the distribution and size of the delaminated and non-delaminated areas as the reason the fried crusts can be disagreeable to certain consumers. Clearly a need exists to improve the taste and texture of pizza crusts by controlling the distribution and extent of delamination.

We have found that by forming dough with certain embossed patterns compressed into the dough forming a specific footprint, the size, shape and distribution of the laminated and non-laminated zones can be very closely controlled. The control of the delamination results in the associated control of cooking extent, fat content from the frying step, taste, and mouth feel.

Novissimo, US—A—3,303,796 teaches forming three-dimensional shapes such as animal or human figures from confectionary materials such as chewing gum and candy by roll-pressing three-dimensional shapes from a confectionary. Moline, US—A—3,765,909 teaches a process for scoring a pizza shell into pie-shaped sections by stamping the frozen pizza in a die stamping unit. Wagner, US—A—3,962,751 teaches a method for scoring food products such as meat patties in a scoring station using a scoring device comprising flexible plastic teeth used for penetrating the patty either completely or partially with plastic material being yieldable upon striking an obstruction.

Totino, US—A—4,170,659 teaches docking a dough sheet using punched holes which upon frying form fairly hard zones around the holes defining a rivet-like bond which connects the upper and lower surfaces of the pizza shell. Totino further teaches that by restraining the docked shell during cooking beneath a metal screen, the qualities of the shell can be improved. In one embodiment, the metal screen comprises wires or rods which extend generally transversely but have random bends. Randomly oriented wires are fixed to the transversely extending wires, and these wires are illustrated as being in the form of a grid-like pattern of lines. Westover, US—A—4,208,441 teaches a method for cooking food products such as flat sheets of dough using an apparatus including a plurality of mating pocketed cooking irons mounted upon endless conveyors which completely enclose the dough sheet and control its delamination. Anstet, US—A—4,308,286 teaches a method for producing a laminated imperforate nondocked product which comprises frying the dough while confining the dough between reticular forms, such as a metal mesh, spaced apart at a distance substantially equal to the thickness of the raw dough pieces, said forms being of a mesh size to control delamination of the dough during cooking in oil.

According to one aspect of the present invention there is provided an embosser for embossing a dough sheet, the embosser having a plurality of raised embossing elements which are elongate in a direction transverse to their height, these embossing elements being disposed in intersecting rows such that the embossing elements together form a grid-like pattern of lines, whereby the embosser, when pressed into the dough sheet, produces in the dough sheet a pattern of elongate compressed zones corresponding to the grid-like pattern of lines, the dough sheet in the interstices of the grid-like pattern of line being uncompressed, characterized in that the embossing elements are unconnected at the intersections of the grid-like pattern of lines whereby, in use, the dough sheet is uncompressed at the points where the grid lines would intersect if the grid lines were continuous.

According to another aspect of the present invention, there is provided a method of treating a dough sheet by selectively compressing zones in a dough sheet without forming a score line, the method comprising pressing an embosser into the dough sheet to form a pattern of elongate compressed zones in the form of a grid-like pattern of lines, the dough in the interstices of the grid-like pattern of lines being uncompressed, characterized in that the elongate compressed zones are unconnected at the intersections of the grid-like pattern of lines, the dough being uncompressed at the points where the grid lines would intersect if the grid lines were continuous.

In a preferred embodiment, the uncompressed blister-forming zones are substantially parallelogram-shaped, and running along a grid line, each elongated compressed zone is laterally offset from an adjacent compressed zone. The separation between elongated compression zones at the grid intersections is sufficient to define a plurality of second uncompressed blister-forming zones.

Preferably, the compressed zones have an area that is from 6% to 12% of the area of the uncompressed zones.

In one embodiment of the invention, the embosser comprises a shaft for rotation about a longitudinal axis. A cylindrical roller is cooperatively connected to the shaft and the roller is rotatable about the longitudinal axis. A plurality of raised elongate embossing elements are cooperatively connected to the roller.

In another embodiment, the embosser comprises a shaft for rotation about a longitudinal axis. A plurality of embossing vanes are cooperatively connected to the shaft. The vanes have a plurality of raised elongate embossing elements.

For a better understanding of the present invention and to show how it may be carried into effect, reference will now be made, by way of example, to the accompanying drawings, in which:

Figure 1 is a perspective view of a dough embosser.

Figure 2 is a generated plan view of the embossing surface of the dough embosser shown in Figure 1.

Figure 3 is a cross-sectional view of the dough embosser of Figure 2, taken generally along the lines 3—3.

Figure 4 is a front elevational view of another embodiment of a dough embosser.

Figure 5 is a cross-sectional view of the dough embosser of Figure 4, taken generally along the lines 5—5.

Figure 6 is a cross-sectional view of the dough embosser of Figure 4, taken generally along the lines 6—6.

Figure 7 is a perspective view of a fried pizza crust.

Figure 8 is a cross-sectional view of the pizza crust of Figure 7, taken generally along the lines 8—8.

Figure 9 is a cross-sectional view of the pizza crust of Figure 7, taken generally along the lines 9—9.

Figure 10 is a top plan view of a dough sheet after being embossed.

Figure 11 is a cross-section view of the dough sheet of Figure 10, taken generally along the lines 11—11.

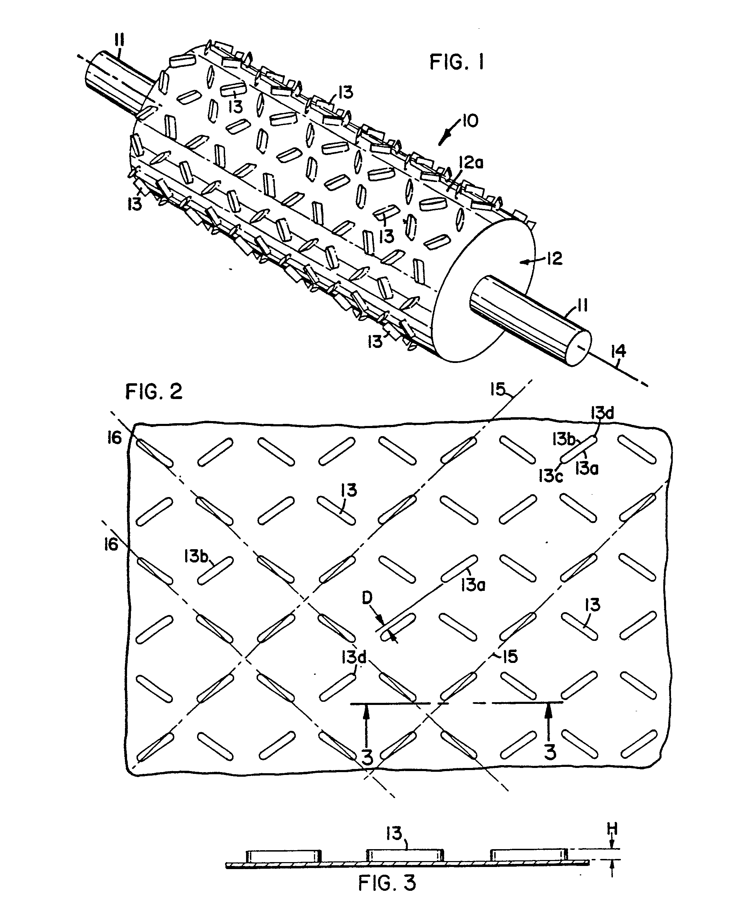

Referring to the drawings, wherein like numerals represent like parts throughout the several views, there is generally designated at 10 in Figure 1, a dough embosser. The dough embosser 10 includes a shaft 11 for rotation about a longitudinal axis 14. A cylindrical roller 12 is cooperatively connected to the shaft 11 and the roller 12 is rotatable about the longitudinal axis 14. The cylindrical roller 12 has an outer surface 12a. A plurality of raised elongate embossing elements 13 are cooperatively connected to the outer surface 12a of the roller 12. As shown in Figure 2, the elongate embossing elements 13 have sidewalls 13a, 13b, 13c, 13d. Sidewalls 13a and 13b are generally planar and sidewalls 13c and 13d are generally curved.

In a preferred embodiment, the shaft 11, cylindrical roller 12 and elongate embossing elements 13 are machined from a single piece of stainless steel. Stainless steel is durable, hard and stable. Also, there are no corrosion problems when the embosser is frequently cleaned. It is well-known in the art how to machine raise configurations from a single stock of metal. It is understood that other suitable materials, such as aluminum may be used. It is also understood that the various components of the embosser 10 may be individually made and suitable assembled by methods well-known in the art.

Figure 2 shows a generated plan view of the outer surface 12a of the cylindrical roller 12. The embossing elements 13 form a grid-like pattern on the outer surface 12a of the cylindrical roller 12. For convenience, I have described the array of embossing elements 13 as being arranged along a grid like pattern. This terminology is used to illustrate the invention and should not be used to unduly limit the invention. The embossing elements 13, which taken together, appear to form a grid or network of offset or zigzag lines. Individual, and imaginary, first grid lines 15 are generally parallel to one another. Individual, and imaginary, second grid lines 16 are generally parallel to one another. Grid lines 16 intersect grid lines 15. The elongate embossing elements 13, along one of the grid lines, are laterally offset from an adjacent embossing element 13. The lateral displacement "D" is illustrated in Figure 2 by extending the side 13a to an adjacent embossing element 13. The distance from the imaginary extension of side 13a to side 13b of the adjacent embossing element 13 is the lateral displacement "D". The lateral displacement "D" is between 0.2 to 0.8 centimeters, preferably 0.4 to 0.6 centimeters, and as shown in the preferred embodiment in Figure 2, is 0.5 centimeters. The lateral displacement "D" prevents the embossing elements 13 from forming a score line on a dough sheet 17. If the embossing elements 13 were not offset, the corresponding compressed zones 18 would form a line of weakness, like that of a cracker. The lateral displacement "D" prevents a line of weakness and provides for a stronger crust after frying.

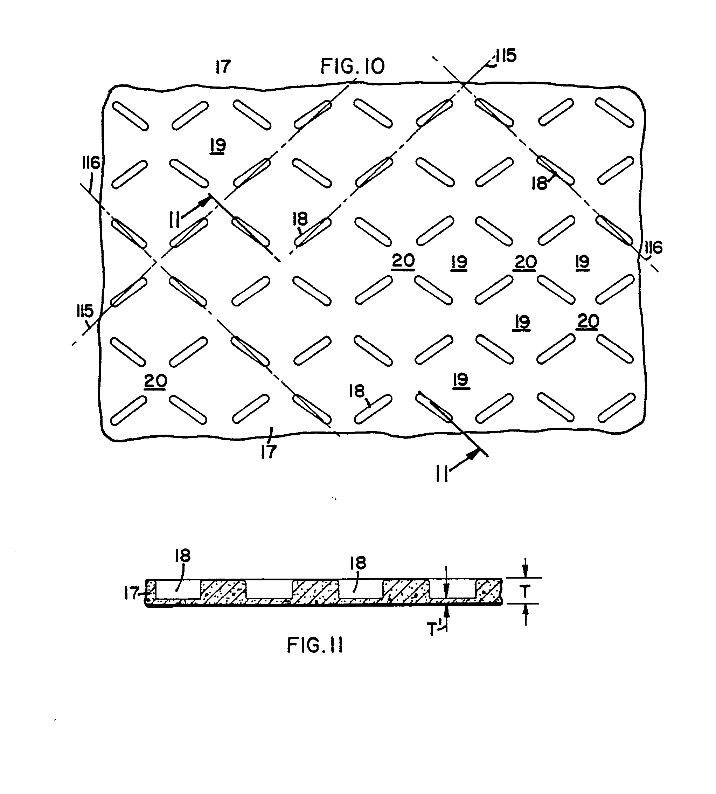

Figure 10 illustrates a top plan view of a dough sheet 17 after it has been embossed by embosser 10 and before the dough sheet 17 is fried in oil. The dough sheet 17 has a plurality of compressed zones of dough 18 which correspond in position to where the embossing elements 13 of the embosser 10 came in contact with the dough sheet 17. The dough sheet 17, except for the compressed zones of dough 18 remains uncompressed. The compress zones of dough 18 form a grid-like pattern of elongated compressed zones of dough 18. The grid-like pattern is necessarily the same as the grid-like pattern of the embossing elements 13 on the outer surface 12a of the cylindrical roller 12. The grid-like pattern of elongated compressed zones, which taken together, appear to form a grid or network of zig-zag or offset lines. A plurality of first grid lines 115 and a plurality of second grid lines 116, correspond respectively to grid lines 15 and 16. It is understood that the grid lines 115 and 116 are imaginary lines and are shown and described only to aid in the understanding of the alignment and relative positioning of the compressed zones of dough 18. The spacing and configuration of the compressed zones of dough 18 is the same as the elongate embossing elements 13. The elongated compressed zones of dough 18 are unconnected and uncompressed at the intersection of grid lines 115 and 116.

The compressed zones of dough 18 form a plurality of uncompressed large blister-forming zones 19. The elongated compressed zones of dough 18 form grids which substantially enclose a plurality of adjacent compressed zone-sharing uncompressed blister-forming zones. In a preferred embodiment, the uncompressed large blister-forming zones 19 are substantially parallelograms.

The elongated compression zones of dough 18 are separated at the grid intersections sufficiently to define a plurality of intersection blister-forming zones 20.

The compressed zones of dough 18 have an area that is from 6% to 12% of the area of the uncompressed dough sheet 17. Preferably, the percentage of compressed zones 18 to uncompressed area of the dough sheet 17 is approximately 6% to 10% and in the preferred embodiment, 8%.

As shown in Figure 11, the thickness of the uncompressed dough sheet 17 is represented by the letter T, and the thickness of the compressed zones 18 is represented by the letter T'. Our current research has shown that preferably, T' is 6% to 12% of the thickness T. In a preferred embodiment, the thickness T' of the compressed zone is 6% to 10% of the thickness T of the uncompressed dough sheet 17. It is understood that values outside of these ranges may be used with a corresponding reduction from the optimum.

As shown in Figure 3, the height "H" of the embossing elements 13 is approximately 0.6 centimeters. However, it is understood, that other suitable heights may be used. It is only necessary that the height "H" be sufficient to compress the compressed zones 18 without the outer surface 12a touching the dough sheet 17.

In a preferred embodiment, the length of the elongate embossing elements 13 is between 1.6 to 2.6 centimeters and their width is between 0.2 to 0.4 centimeters. The closest spacing between the ends of adjacent compressed zones of an uncompressed blister-forming zone 19 are from 1.0 to 1.5 centimeters apart. Preferably, the compressed zones 18 are from 1.2 to 1.3 centimeters apart. The area of the large blister-forming zone 19 is from 10 to 15 square centimeters and preferably between 12.0 to 14.5 square centimeters. The area of the intersection blister-forming zones 20 is from 1.2 to 2.5 square centimeters and preferably 1.8 to 2.2 square centimeters. It is understood that values outside of these ranges may be used with a corresponding reduction from the optimum.

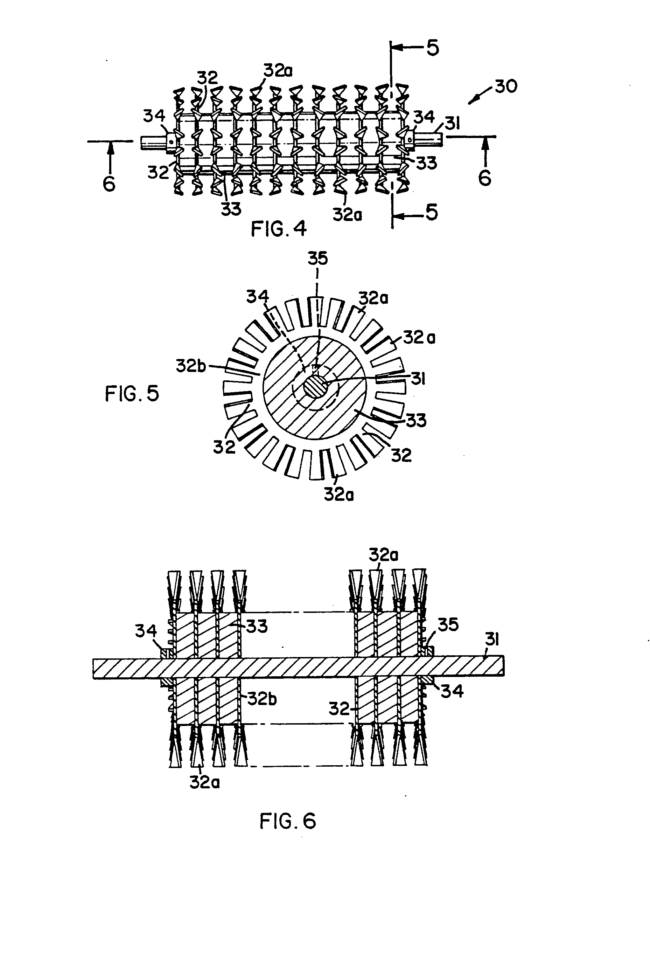

Another embodiment of the present invention is shown in Figures 4, 5 and 6. A dough embosser generally designated as 30, includes a shaft 31. A plurality of disk members 32b are positioned on the shaft 31. The disk 32b has an aperture in its center through which the shaft 31 is inserted. A plurality of vaned members 32 are secured to the disk member 32b. Spacers 33 are positioned between the embossing vaned members 32. The spacers 33 have an aperture in their center for which the shaft 31 is inserted. The assembly of embossing vaned members 32 and spacers 33 are held in position and secured to the shaft 31 by two collars 34. The collars 34 are secured to the shaft 31 by means of set screws 35. The vaned members 32 each have an embossing element or vane 32a cooperatively connected thereto.

The size and spacial relationships of the embossing elements or vanes 32a of dough embosser 30, as shown in Figures 4, 5 and 6, are identical to the dimensions and special relationships of the elongate embossing elements 13 of dough embosser 10, as shown in Figures 1, 2 and 3. Accordingly the footprint made on the dough sheet 17 is the same for either embodiment.

It is understood that while dough embossers 10 and 30 are used for compressing a sheet of dough that passes underneath the revolving embossing elements 13 and 32a, a dough embosser may also be formed having a generally planar surface, such as that shown in the generated plan view of Figure 2. For such a dough embosser, the embosser would reciprocate in a linear motion stamping a dough sheet that is positioned under the dough embosser.

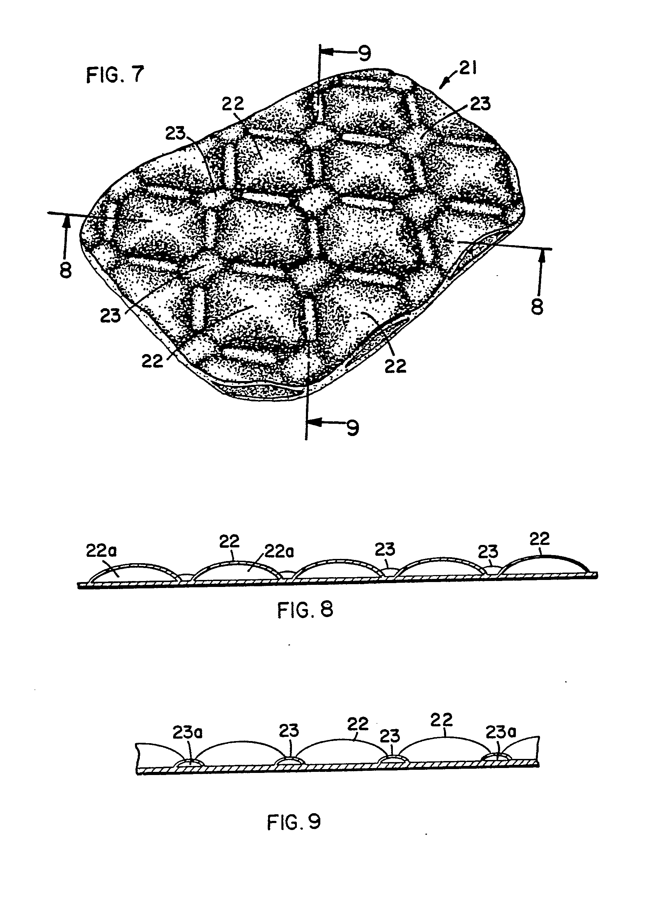

In use, the dough embosser 10 is pressed onto the dough sheet 17 to form a grid-like pattern of elongated compressed zones of dough 18, wherein the elongated compressed zones of dough 18 are unconnected and uncompressed at the grid intersections, and wherein the elongated compressed zone of dough 18 substantially enclose a plurality of adjacent compressed zone-sharing uncompressed blister-forming zones. The grid-like pattern in the dough 17 is determined by the grid-like pattern of the elongate embossing elements 13. The dough sheet 17 is cut to size and subsequently fried. A fried crust 21 is shown in Figure 7. The fried crust 21 has a series of large blisters 22 which corresponds to the large blister-forming zones 19 in the dough sheet 17. Intersection blisters 23 correspond to the intersection blister-forming zones 20 in the dough sheet 17. The fried crust 21 is very uniform in appearance, size and shape. The combination of the size of the elongate embossing elements 13, spacing of the elongate elements 13 and the percentage of compression yields this very uniform fried crust.

As shown in Figure 8, the large blisters 22 have an internal cavity 22a. As shown in Figure 9, the intersection blister 23 has an internal cavity 23a. The compressed zone 18 and the dough sheet 17 uniformly control the size and shape of the internal cavities 22a and 23a.

If the thickness T' is greater than 12% of the thickness T, the fried pizza crust 21 has open areas and delamination occurs. Also, if the percentage of compressed zones 18 to the uncompressed zones of the dough sheet 17 is greater than 12%, the uniform appearance is lost. Also, if the compressed zones of dough 18 are less than 6% of the uncompressed areas of the dough sheet 17, the integrity and uniformity of blisters 22 and 23 suffer. It is understood that values outside this range may be used with a corresponding reduction from the optimum.

Other modifications of the invention will be apparent to those skilled in the art in light of the foregoing description. This description is intended to provide specific examples of individual embodiments which clearly disclose the present invention. Accordingly, the invention is not limited to these embodiments or to the use of elements having specific configurations and shapes as presented herein. All alternative modifications and variations of the present invention which fall in the scope of the appended claims are included.

## Claims

1. An embosser (10, 30) for embossing a dough sheet (17), the embosser (10, 30) having a plurality of raised embossing elements (13, 32a) which are elongated in a direction transverse to their height, these embossing elements (13, 32a) being disposed in intersecting rows (15, 16) such that the embossing elements (13, 32a) together form a grid-like pattern of lines, whereby the embosser (10, 30), when pressed into the dough sheet (17), produces in the dough sheet (17) a pattern of elongate compressed zones (18) corresponding to the grid-like pattern of lines, the dough sheet (17) in the interstices (19) of the grid-like pattern of lines being uncompressed, characterized in that the embossing elements (13, 32a) are unconnected at the intersections of the grid-like pattern of lines whereby, in use, the dough sheet (17) is uncompressed at the points where the grid lines would intersect if the grid lines were continuous.

2. An embosser as claimed in claim 1, characterized in that the embosser (10, 30) comprises a cylinder (12) mounted on a rotatable shaft (11), the embossing elements (13) being provided on the cylinder (12).

3. An embosser as claimed in claim 1, characterized in that the embosser (10, 30) comprises a rotatable shaft (31) carrying axially spaced vaned members (32) provided with vanes (32a) constituting the embossing elements, spacers (33) being mounted on the shaft (31) between adjacent vaned members (32).

4. An embosser as claimed in any one of the preceding claims, characterized in that the elongate tip of each embossing element (13, 32a) is inclined to the direction of the row (15, 16) in which it lies.

5. An embosser as claimed in any one of the preceding claims, characterized in that the embossing elements (13, 32a) define substantially parallelogram-shaped regions in the interstices (19) of the grid-like pattern of lines.

6. An embosser as claimed in any one of the preceding claims, characterized in that the area of each interstice (19) of the grid-like pattern of lines is not less than 10 cm² and not more than 15 cm².

7. An embosser as claimed in any one of the preceding claims, characterized in that the tip of each embossing element (13, 32a) is not less than 1.6 cm and not more than 2.6 cm in length and not less than 0.2 cm and not more than 0.4 cm in width.

8. An embosser as claimed in any one of the preceding claims, characterized in that the distance between adjacent embossing elements (13, 32a) in each row (15, 16) at the intersections of the grid-like pattern of lines is sufficient to define a blister-forming region (20) in the dough.

9. An embosser as claimed in any one of the preceding claims, characterized in that the distance between adjacent embossing elements (13, 32a) in each row (15, 16) at the intersections of the grid-like pattern of lines is not less than 1 cm and not more than 1.5 cm.

10. An embosser as claimed in claim 9, characterized in that the distance between adjacent embossing elements (13, 32a) in each row (15, 16) at the intersections of the grid-like pattern of lines is not less than 1.2 cm and not more than 1.3 cm.

11. An embosser as claimed in any one of the preceding claims, characterized in that the embossing elements (13, 32a) are made from aluminium.

12. An embosser as claimed in any one of claims 1 to 10, characterized in that the embossing elements (13, 32a) are made from stainless steel.

13. An embosser as claimed in any one of the preceding claims, characterized in that, in use, the total area of a dough sheet (17) compressed by the embossing elements (13, 32) is not less than 6% and not more than 12% of the total area of the dough sheet which is left uncompressed.

14. An embosser as claimed in claim 10, in which the total area compressed by the embossing elements (13, 32a) is not more than 10% of the total area of the dough sheet which is left uncompressed.

15. A method of treating a dough sheet (17) by selectively compressing zones in a dough sheet (17) without forming a score line, the method comprising pressing an embosser (10, 30) into the dough sheet (17) to form a pattern of elongate compressed zones (18) in the form of a grid-like pattern of lines, the dough sheet (17) in the interstices (19) of the grid-like pattern of lines being uncompressed, characterized in that the elongate compressed zones are unconnected at the intersections of the grid-like pattern of lines, the dough sheet (17) being uncompressed at the points where the grid lines would intersect if the grid lines were continuous.

16. A method as claimed in claim 15, characterized in that the elongate compressed zones (18) are disposed in intersecting rows (15, 16) to form the grid pattern, each elongate compressed zone (18) being inclined to the direction of the row (15, 16) in which it lies.

17. A method as claimed in claim 15 or 16, characterized in that the uncompressed zones (19) in the interstices (19) of the grid pattern are substantially parallelogram-shaped.

18. A method as claimed in claims 15 to 17, characterized in that each uncompressed zone (19) has an area of not less than 10 cm$^2$ and not more than 15 cm$^2$.

19. A method as claimed in any one of claims 15 to 18, characterized in that the compressed zones (19) are not less than 1.6 cm and not more than 2.6 cm in length, not less than 0.2 cm and not more than 0.4 cm in width.

20. A method as claimed in any one of claims 15 to 19, characterized in that the distance between the compressed zones (18) at the intersections of the grid-like pattern of lines is sufficient to define a plurality of uncompressed blister-forming zones (20).

21. A method as claimed in any one of claims 15 to 20, characterized in that adjacent compressed zones (18) in a row (15, 16) are spaced apart by not less than 1.0 cm and not more than 1.5 cm.

22. A method as claimed in claim 21, characterized in that the adjacent compressed zones (18) are spaced apart by not less than 1.2 cm and not more than 1.3 cm.

23. A method as claimed in any one of claims 15 to 22, characterized in that the compressed zones (18) have a thickness (T') which is not more than 12% of the thickness (T) of the uncompressed zones (19, 20).

24. A method as claimed in claim 23, characterized in that the compressed zones (18) have a thickness (T') which is not less than 6% and not more than 10% of the thickness (T) of the uncompressed zones (18, 20).

**Patentansprüche**

1. Prägevorrichtung (10, 30) zum Beprägen einer Teigfläche (17) mit mehreren erhabenen Prägeelementen (13, 32a), die sich quer zu ihrer Höhe in Längsrichtung erstrecken und in sich schneidenden Reihen (15, 16) so angeordnet sind, daß sie zusammen ein gitterartiges Linienmuster bilden, wobei die Prägevorrichtung (10, 30) beim Pressen in die Teigfläche (17) darin ein Muster länglicher, dem gitterartigen Linienmuster entsprechender Preßzonen (18) hinterläßt und die Teigfläche (17) in den Zwischenräumen (19) des gitterartigen Linienmusters nicht gepreßt wird, dadurch gekennzeichnet, daß die Prägeelemente (13, 32a) im Bereich der Schnittpunkte des gitterartigen Linienmusters unterbrochen sind, so daß beim Preßvorgang die Teigfläche (17) im Bereich der Punkte, an denen sich die Gitterlinien schneiden würden, wären sie durchgehend, nicht gepreßt wird.

2. Prägevorrichtung (10, 30) nach Anspruch 1, dadurch gekennzeichnet, daß sie eine auf einer drehbaren Welle (11) aufgenommene Walze (12) enthält, die mit Prägeelementen (13) versehen ist.

3. Prägevorrichtung (10, 30) nach Anspruch 1, dadurch gekennzeichnet, daß sie eine drehbare Welle (31) enthält, die axial in Zwischenräumen angeordnete Schaufelelemente (32) aufnimmt, die mit die Prägeelemente bildenden Schaufeln (32a) versehen sind, wobei Distanzringe (33) zwischen benachbarten Schaufelelementen (32) auf der Welle (31) vorgesehen sind.

4. Prägevorrichtung (10, 30) nach einem der vorhergehenden Ansprüche, dadurch gekennzeichnet, daß die längliche Spitze eines jeden Prägeelements (13, 32a) in Richtung der Reihe (15, 16) geneigt ist, in der sich sich befindet.

5. Prägevorrichtung (10, 30) nach einem der vorhergehenden Ansprüche, dadurch gekennzeichnet, daß die Prägeelemente (13, 32a) etwa parallelogrammförmige Bereiche in den Zwischenräumen (19) des gitterartigen Linienmusters begrenzen.

6. Prägevorrichtung (10, 30) nach einem der vorhergehenden Ansprüche, dadurch gekennzeichnet, daß die Fläche eines jeden Zwischenraums (19) des gitterartigen Linienmusters nicht weniger als 10 cm$^2$ und nicht mehr als 15 cm$^2$ beträgt.

7. Prägevorrichtung (10, 30) nach einem der vorhergehenden Ansprüche, dadurch gekennzeichnet, daß die Spitze eines jeden Prägeelements (13, 32a) eine Länge von nicht weniger als 1,6 cm und nicht mehr als 2,6 cm sowie eine Breite von nicht weniger als 0,2 cm und nicht mehr als 0,4 cm besitzt.

8. Prägevorrichtung (10, 30) nach einem der vorhergehenden Ansprüche, dadurch gekennzeichnet, daß benachbarte Prägeelemente (13, 32a) in jeder Reihe (15, 16) im Bereich der Schnittpunkte des gitterartigen Linienmusters genügend weit von einander entfernt sind, um eine wulstbildende Zone (20) in der Teigfläche (17) zu begrenzen.

9. Prägevorrichtung (10, 30) nach einem der vorhergehenden Ansprüche, dadurch gekennzeichnet, daß benachbarte Prägeelemente (13, 32a) in jeder Reihe (15, 16) im Bereich der Schnittpunkte des gitterartigen Linienmusters nicht weniger als 1 cm und nicht mehr als 1,5 cm von einander entfernt sind.

10. Prägevorrichtung (10, 30) nach Anspruch 9, dadurch gekennzeichnet, daß benachbarte Prägeelemente (13, 32a) in jeder Reihe (15, 16) im Bereich der Schnittpunkte des gitterartigen Linienmusters nicht weniger als 1,2 cm und nicht mehr als 1,3 cm von einander entfernt sind.

11. Prägevorrichtung (10, 30) nach einem der vorhergehenden Ansprüche, dadurch gekennzeichnet, daß die Prägeelemente (13, 32a) aus Aluminium sind.

12. Prägevorrichtung nach einem der Ansprüche 1 bis 10, dadurch gekennzeichnet, daß die Prägeelemente (13, 32a) aus rostfreiem Stahl sind.

13. Prägevorrichtung (10, 30) nach einem der vorhergehenden Ansprüche, dadurch gekennzeichnet, daß beim Preßvorgang der gesamte, von den Prägeelementen (13, 32a) gepreßte Bereich der Teigfläche (17) nicht weniger als 6% und nicht mehr als 12% des gesamten, nicht gepreßten Bereichs der Teigfläche (17) beträgt.

14. Prägevorrichtung (10, 30) nach Anspruch 10, dadurch gekennzeichnet, daß der gesamte, von den Prägeelementen (13, 32a) gepreßte Bereich nicht mehr als 10% des nicht gepreßten Gesamtbereichs der Teigfläche (17) beträgt.

15. Verfahren zum Behandeln einer Teigfläche (17) durch wahlweises Pressen von Bereichen dieser Teigfläche (17) ohne Bildung einer Markierungslinie, wobei eine Prägevorrichtung (10, 30) zur Bildung eines Musters länglicher Preßzonen (18) in der Form eines gitterartigen Linienmusters in die Teigfläche (17) gepreßt wird, ohne letztere in den Zwischenräumen (19) des gitterartigen Linienmusters zu pressen, dadurch gekennzeichnet, daß die länglichen Preßzonen (18) im Bereich der Schnittpunkte des gitterartigen Linienmusters unterbrochen sind, wobei an den Punkten, an denen sie die Gitterlinien, wären sie durchgehend, schneiden würden, die Teigfläche (17) nicht gepreßt wird.

16. Verfahren nach Anspruch 15, dadurch gekennzeichnet, daß die länglichen Preßzonen (18) zur Bildung des Gittermusters in sich schneidenden Reihen (15, 16) angeordnet sind, wobei jede längliche Preßzone (18) in Richtung der Reihe (15, 16) in der sie sich befindet, geneigt ist.

17. Verfahren nach Anspruch 15 oder 16, dadurch gekennzeichnet, daß die nicht gepreßten Zonen (19) in den Zwischenräumen (19) des Gittermusters etwa die Form eines Parallelogramms aufweisen.

18. Verfahren nach einem der vorhergehenden Ansprüche 15 bis 17, dadurch gekennzeichnet, daß jede nicht gepreßte Zone (19) eine Fläche von nicht weniger als 10 cm² und nicht mehr als 15 cm² besitzt.

19. Verfahren nach einem der vorhergehenden Ansprüche 15 bis 18, dadurch gekennzeichnet, daß die Preßzonen (18) eine Länge von nicht weniger als 1,6 cm und nicht mehr als 2,6 cm sowie eine Breite von nicht weniger als 0,2 und nicht mehr als 0,4 cm aufweisen.

20. Verfahren nach einem der vorhergehenden Ansprüche 15 bis 19, dadurch gekennzeichnet, daß die Preßzonen (18) im Bereich der Schnittpunkte des gitterartigen Linienmusters genügend weit von einander entfernt sind, um mehrere nicht gepreßte wulstbildende Zonen (20) zu begrenzen.

21. Verfahren nach einem der vorhergehenden Ansprüche 15 bis 20, dadurch gekennzeichnet, daß benachbarte Preßzonen (18) in einer Reihe (15, 16) einen gegenseitigen Abstand von nicht weniger als, 1,0 cm und nicht mehr als 1,5 cm aufweisen.

22. Verfahren nach Anspruch 21, dadurch gekennzeichnet, daß die benachbarten Preßzonen (18) einen gegenseitigen Abstand von nicht weniger als 1,2 cm und nicht mehr als 1,3 cm aufweisen.

23. Verfahren nach einem der vorhergehenden Ansprüche 15 bis 22, dadurch gekennzeichnet, daß die Preßzonen (18) eine Dicke (T'), die nicht mehr als 12% der Dicke (T) der nicht gepreßten Zonen (19, 20) beträgt, aufweisen.

24. Verfahren nach Anspruch 23, dadurch gekennzeichnet, daß die Preßzonen (18) eine Dicke (T'), die nicht weniger als 6% und nicht mehr als 10% der Dicke (T) der nicht gepreßten Zonen (19, 20) beträgt, aufweisen.

## Revendications

1. Un appareil (10, 30) pour gaufrer une feuille de pâte (17), cet appareil (10, 30) présentant une pluralité d'éléments de gaufrage en relief (13, 32a) qui sont allongés dans une direction transversale par rapport à leur hauteur, ces éléments de gaufrage (13, 32a) étant disposés en rangées qui se coupent (15, 16) et telle façon que les éléments de gaufrage (13, 32a) forment ensemble un réseau de lignes en forme de grille, de telle façon que l'appareil à gaufrer (10, 30) lorsqu'il est pressé sur la feuille de pâte (17) produise sur celle-ci un réseau de zones comprimées allongées (18) correspondant au réseau de lignes en forme de grille, la feuille de pâte (17) restant non comprimée dans les espaces libres (19) du réseau de lignes en forme de grille, caractérisé en ce que les éléments de gaufrage (13, 32a) ne sont pas reliés aux intersections du réseau de lignes en forme en grille, de telle façon qu'en service, la feuille de pâte (17) ne soit pas comprimée aux points où les lignes de grille intersecteraient si les lignes de grille étaient continues.

2. Un appareil à gaufrer tel que revendiqué à la revendication 1, caractérisé en ce que l'appareil à gaufrer (10, 30) comporte un cylindre (12) monté sur un arbre rotatif (11), les éléments de gaufrage (13) étant prévus sur le cylindre (12).

3. Un appareil à gaufrer tel que revendiqué à la revendication 1, caractérisé en ce que l'appareil à gaufrer (10, 30) comporte un arbre rotatif (31) supportant des organes d'ailettes axialement espacés (32) munis d'ailettes (32a) constituant les éléments de gaufrage, des entretoises (33) étant montées sur l'arbre (31) entre les organes d'ailettes adjacents (32).

4. Un appareil à gaufrer tel que revendiqué dans l'une quelconque des revendications précédentes, caractérisé en ce que la pointe alongée de chaque élément de gaufrage (13, 32a) est inclinée dans la direction de la rangée (15, 16) dans laquelle elle se trouve.

5. Un appareil à gaufrer tel que revendiqué dans l'une quelconque des revendications précédentes, caractérisé en ce que les éléments de gaufrage (13, 32a) définissent des zones sensiblement en forme de parallélogramme aux espaces libres (19) du réseau de lignes en forme de grille.

6. Un appareil à gaufrer tel que revendiqué dans l'une quelconque des revendications précédentes, caractérisé en ce que la surface de chaque espace libre (19) du réseau de lignes en forme de grille n'est pas inférieure à 10 cm² et n'est pas supérieure à 15 cm².

7. Un appareil à gaufrer tel que revendiqué dans l'une quelconque des revendications précédentes, caractérisé en ce que la pointe de chaque élément de gaufrage (13, 32a) n'est pas inférieure à 1,6 cm et pas supérieure à 2,6 cm en longueur, et pas inférieure à 0,2 cm et pas supérieure à 0,4 cm en largeur.

8. Un appareil à gaufrer tel que revendiqué dans l'une quelconque des revendications précédentes, caractérisé en ce que la distance qui sépare les éléments de gaufrage adjacents (13, 32a) de chaque rangée (15, 16) aus intersections du réseau de lignes en forme de grille est suffisante pour définir une zone (20) de formage d'ampoules dans la pâte.

9. Un appareil à gaufrer tel que revendiqué dans l'une quelconque des revendications précédentes, caractérisé en ce que la distance qui sépare les éléments de gaufrage adjacents (13, 32a) de chaque rangée (15, 16) aux intersections du réseau de lignes en forme de grille n'est pas inférieure à 1 cm et pas supérieure à 1,5 cm.

10. Un appareil à gaufrer tel que revendiqué à la revendication 9, caractérisé en ce que la distance qui sépare des éléments de gaufrage adjacentes (13, 32a) de chaque rangée (15, 16) aux intersections du réseau de lignes en forme de grille n'est pas inférieure à 1,2 cm et pas supérieure à 1,3 cm.

11. Un appareil à gaufrer tel que revendiqué dans l'une quelconque des revendications précédentes, caractérisé en ce que les éléments de gaufrage (13, 32a) sont réalisés en aluminium.

12. Un appareil à gaufrer tel que revendiqué dans l'une des revendications 1 à 10, caractérisé en ce que les éléments de gaufrage (13, 32a) sont réalisés en acier inoxydable.

13. Un appareil à gaufrer tel que revendiqué dans l'une quelconque des revendications précédentes, caractérisé en ce qu'en service, la surface totale de la feuille de pâte (17) comprimée par les éléments de gaufrage (13, 32) n'est pas inférieure à 6% et pas supérieure à 12% de la surface totale de la feuille de pâte qui est laissée non comprimée.

14. Un appareil à gaufrer tel que revendiqué à la revendication 10, dans lequel la surface totale comprimée par les éléments de gaufrage (13, 32a) n'est pas inférieure à 10% de la surface total de la feuille de pâte qui est laissée non comprimée.

15. Un procédé de traitement d'une feuille de pâte (17) en comprimant sélectivement des zones dans une feuille de pâte (17) sans former une ligne d'incision, le procédé consistant à presser un appareil à gaufrer (10, 30) sur la feuille de pâte (17) pour former un réseau de zones comprimées allongées (18) sous la forme d'un réseau de lignes en forme de grille, la feuille de pâte (17) aux espaces libres (19) du réseau de lignes en forme de grille étant non comprimée, caractérisé en ce que les zones comprimées allongées ne sont pas reliées aux intersections du réseau de lignes en forme de grille, la feuille de pâte (17) étant non comprimée aux points où les lignes de grille intersecteraient si ces lignes de grille étaient continues.

16. Un procédé tel que revendiqué à la revendication 15, caractérisé en ce que les zones comprimées allongées (18) sont disposées en rangées d'intersection (15, 16) pour former le réseau de grille, chaque zone comprimée allongée (18) étant inclinée par rapport à la direction de la rangée (15, 16) dans laquelle elle se trouve.

17. Un procédé tel que revendiqué à la revendication 15 ou 16, caractérisé en ce que les zones non comprimées (19) aux espaces libres (19) du réseau de grille sont sensiblement en forme de parallélogramme.

18. Un procédé tel que revendiqué aux revendications 15 à 17, caractérisé en ce que chaque zone non comprimée (19) présente une surface qui n'est pas inférieure à 10 cm² et pas supérieure à 15 cm².

19. Un procédé tel que revendiqué dans l'une quelconque des revendications 15 à 18, caractérisé en ce que les zones comprimées (18) ne sont pas inférieures à 1,6 cm et pas supérieures à 2,6 cm de longueur, et pas inférieures à 0,2 cm et pas supérieures à 0,4 cm en largeur.

20. Un procédé tel que revendiqué dans l'une quelconque des revendications 15 à 19, caractérisé en ce que la distance qui sépare les zones comprimées (18) aux points d'intersection du réseau de lignes en forme de grille est suffisante pour définir une pluralité de zones non comprimées de formage d'ampoules (20).

21. Un procédé tel que revendiqué dans l'une quelconque des revendications 15 à 20, caractérisé en ce que les zones comprimées adjacentes (18) d'une rangée (15, 16) sont espacées d'une distance qui n'est pas inférieure à 1,0 cm et pas supérieure à 1,5 cm.

22. Un procédé tel que revendiqué à la revendication 21, caractérisé en ce que les zones comprimées adjacentes (18) sont espacées d'une distance qui n'est pas inférieure à 1,2 cm et pas supérieure à 1,3 cm.

23. Un procédé tel que revendiqué dans l'une quelconque des revendications 15 à 22, caractérisé en ce que les zones comprimées (18) présentent une épaisseur (T') qui n'est pas inférieure à 12% de l'épaisseur (T) des zones non comprimées (19, 20).

24. Un procédé tel que revendiqué à la revendication 23, caractérisé en ce que les zones comprimées (18) présentent une épaisseur (T') qui n'est pas inférieure à 6% et pas supérieure à 10% de l'épaisseur (T) des zones non comprimées (18, 20).

FIG. 1

FIG. 2

FIG. 3

FIG. 4

FIG. 5

FIG. 6

FIG. 7

FIG. 8

FIG. 9

3

FIG. 10

FIG. 11